# EUROPEAN PATENT SPECIFICATION

(11) **EP 3 675 083 B1**
(45) Date of publication and mention of the grant of the patent: **14.12.2022**
(21) Application number: 18215992.1
(22) Date of filing: 31.12.2018
(51) Int. Cl.: G09B 23/30

(54) **PROCESS FOR MANUFACTURING ANATOMICAL MODELS**
VERFAHREN ZUR HERSTELLUNG ANATOMISCHER MODELLE
PROCÉDÉ DE FABRICATION DE MODÈLES ANATOMIQUES

(43) Date of publication of application: 01.07.2020
(73) Proprietor: Cella Medical Solutions, S.L., 30009 Murcia (ES)
(72) Inventor: GARCIA CALDERON, Dario, ES-30009 Murcia (ES)
(74) Representative: Díaz Pacheco, Maria Desamparados

(56) References cited:
- EP-A1- 2 977 977
- US-A1- 2018 350 266
- Anonymous: "FAQs - Silpak, Inc. - Polyurethane & silicone mold materials and casting plastics for making rubber molds to cast concrete, plaster, wax, resins & foam from Silpak, Inc.", , 24 September 2015 (2015-09-24), XP055585053, Retrieved from the Internet: URL:https://web.archive.org/web/2015092414 0224/http://www.silpak.com:80/faqs.html [retrieved on 2019-05-02]
- JUSZCZYK JAN ET AL: "Patient Specific Phantom in bimodal image navigation system", 2015 37TH ANNUAL INTERNATIONAL CONFERENCE OF THE IEEE ENGINEERING IN MEDICINE AND BIOLOGY SOCIETY (EMBC), IEEE, 25 August 2015 (2015-08-25), pages 2908-2911, XP032810824, DOI: 10.1109/EMBC.2015.7319000 [retrieved on 2015-11-04]

## Description

The invention, as stated in the title, relates to a process for manufacturing anatomical models, that is, structures of the human body, that are true in shape, size, texture or resistance with respect to the biological structure, which facilitates diagnosis and allows programming, preparing and simulating surgeries. On the other hand these anatomical models are extremely useful for teaching, since they allow not only visualising different parts of the body, but also interacting with them and training in surgical techniques without having to use human bodies.

The relevant field of the art of this invention is that of the health sciences, especially medicine and more specifically the sector for the manufacture of anatomical models.

### BACKGROUND OF THE INVENTION

The production of anatomical models has always been of interest due to their usefulness for study or practice.

The recent eruption of new technologies allows producing images of organs even from inside the body, which can then be printed using 3D printing.

We can find some examples of these techniques in the following publications and patent literature.

The document by DONEY, E. et al. "3D printing of preclinical X-ray computed tomographic data sets". J. VIS. EXP. 22.03.2013.No. 73, e50250, doi:10.3791/50250, pages 1-6. [online], [viewed on 12.11.203]. Consulted on the internet <http://www.jove.com/video/50250/3d-printing-of-preclinical-x-ray-computed-tomographic-data-sets> reveals a process for the 3D printing of a bone structure or part of one from the scanning of a vertebrate.

The document by TAM, M.D. et al. "3-D printout of a DICOM file to aid surgical planning in a 6 year old patient with a large scapular osteochondroma complicating congenital diaphyseal aclasia". RADIOLOGY CASE. January 2012; Vol. 6, No. 1, pages 31-37. DOI:0.3941/jrcr.v6i1.889 http://www.radiologycases.com/index.php/radiologycases/article/view/889/pdf se4 relates to a case in which a DICOM image (Digital Imaging and Communication in Medicine, a worldwide standard for medical image exchange) of a bone tumour is manipulated for 3D printing for diagnosis and preparation for surgery.

The scientific article by Zein, N. N. et al. "Three-dimensional print of a liver for preoperative planning in living donor liver transplantation." Uver Transpl. 19, 1304-1310 (2013) performs a 3D print of a liver using this process.

Other scientific publications such as Valverde, I. et al "3D printed cardiovascular models for surgical planning in complex congenital heart diseases." Journal of Cardiovascular Magnetic Resonance 17, P196 (2015); Tam, M. D. B. S., Laycock, S. D., Brown, J. R. 1. & Jakeways, M. "3D printing of on aortic aneurysm to facilitate decision making and device selection for endovascular aneurysm repair in complex neck anatomy." J. Endovasc. Ther. 20, 863-867 (2013); Wang, J.-O. et al. "Printed three-dimensional anatomic templates for virtual preoperative planning before reconstruction of old pelvic injuries: Initial Results." Chinese Medical Journal 128, 477 (2015) deal with 3D printing of different anatomical models.

Document ES2523419 describes a manufacturing method for specific anatomical models for each patient via a first step, which is not deemed to have inventive step, consisting in the generation of a 3D model of the structure for which we want to create an anatomical model from an imaging diagnosis of the patient and a second step in which the 3D model is printed directly using a 3D printer.

The direct printing of the part described in the stated documents on the one hand limits obtaining models of soft organs since the printing of these requires expensive materials. Moreover, there is no current method that achieves suitable transparency since this is one of the limitations of the layering in 3D printing. On the other hand, none of the cited documents combines different independent elements by positioning them on the final anatomical model as in the case of the internal elements of organs or tumours.

The publication *"*Patient specific phantom in bimodal image navigation system" by Jan Juszczyk, Bartlomiej Pycinski and Ewa Pietka, Member, IEEE, from the Annual International Conference of the IEEE Engineering in Medicine and Biology Society (EMBC) 20150825 IEEE 25/08/2015 Vol: Pages: 2908-2911 relates to the modelling of organs that are joined to one another by axes that facilitate their positioning in a gelatinous body in which nesting areas are first created to house the organs while these are joined to one another by different axes, and later the axes are removed and the gelatinous body is completed, with a cylindrical shape in the case shown. This system cannot be used for the positioning of soft parts since fastening by axes does not allow this.

Patent ES2615034 relates to a process for the manufacture of anatomical models comprising different elements, positioned using soluble filaments, each of these having the consistency with which they occur in nature, thus its usefulness for simulating surgical processes using anatomical models as test models. However, the process described in said patent can be improved upon regarding the demoulding of certain parts, the positioning of internal elements or the optimisation of certain processes for emptying or refilling moulds or discriminating parts by size for the application of different processes.

The subject matter of this invention is a process for obtaining anatomical models that are true to the elements, sizes, shapes, resistance and textures of the organs and biological structures they replicate, solving the aforementioned problems and limitations.

Another subject matter of this invention are the anatomical models obtained with the processes described in the claims.

### DESCRIPTION OF THE INVENTION

In order to solve said problems, we propose a process for manufacturing anatomical models that allows the true reproduction of textures, resistances, colours, shapes and other elements that provide realism and interest to the models obtained.

The process for manufacturing anatomical models starts by capturing one or more images using common techniques such as CAT (computerised axial tomography), NMR (nuclear magnetic resonance), ultrasound or any other, the processing of such images to select (segment) the different elements of the anatomical structure of interest from the images obtained and obtaining one or more editable computer files.

Having obtained the editable images, the manufacturing process of anatomical models comprises the following sub-processes:
1. A sub-process for generating the main moulds.
2. A sub-process for generating internal elements comprising a pouring step.
3. A sub-process for positioning the internal elements.
4. A sub-process for integrating the internal and external elements comprising a pouring step.
5. A post-processing sub-process.

For the purposes of this patent we shall call:
*External elements* the volumes of the anatomical model that are in contact with the exterior, comprising the parenchyma and, as appropriate, the internal elements.
*Internal elements* the parts of the anatomical model intended to be totally or partially embedded within the parenchyma. These *internal elements* may be *rigid* (cysts, bones, vasculatures or tumours, amongst others) or *soft* (vessels or muscles amongst others).
*Parenchyma* is the pouring material of the anatomical model which provides its consistency and which shall bind together all of the elements thereof.
*Filling material* is the pouring material that is not parenchyma and which shall normally be used to fill in internal elements.
*Positioning* is the process by which the *internal elements* are placed in their correct location before being embedded.
*Main moulds* are the moulds used to form the external elements.
*Secondary moulds* are the moulds used to form some of the internal elements.
*Pouring nozzles* are openings that exist in the main or secondary moulds that allow pouring material inside them, whether parenchyma or another filling material.
*Auxiliary positioning elements* are elements that contribute towards placing and fastening certain internal elements during the manufacturing process. One example of this type of auxiliary elements are rods. These auxiliary positioning elements may go all the way through the anatomical model or not.
*Small parts* are parts with a volume that is usually less than 500 ml and *large parts* are those with a volume that is usually more than 500 ml. The division between small parts and large parts based on volume is to be used as a guideline, thus the use of the expression *usually* since there may be cases in which to produce a small part, due to an irregular shape or a large difference in the length and orientation of its axes, it may be advisable to create a larger part, the opposite being more difficult to be the case.
*Pouring* shall be the set of operations carried out to introduce into a mould, whether main or secondary, the pouring material, which shall be a fill in material or parenchyma, as required, with this pouring process being by injection or gravity, and which in addition to the operation itself of introducing the material may comprise any prior handling of the filling material and any subsequent steps for curing said material.

With respect to the above we shall now explain the different sub-processes and steps.
1.- The sub-process for generating the main moulds comprises the following steps:
   - Computer modelling of the editable images until obtaining a file that is compatible with 3D printing. The computer modelling comprises not only the modelling of the shape of the anatomical model itself or the shape of its mould, but also the virtual modelling of the positioning elements, their virtual path and their relationships (housings, anchor points or support points) with the main mould, thus calculating the predetermined cross-section and length of these auxiliary positioning elements.
   - Discrimination between small parts and large parts.
   - For the small parts, the element is prototyped in positive in order to later immerse it in casting silicone, removing the prototype once this has cured and thus obtaining a mould.
   - For large parts the mould is printed, in this case a thin sheath that allows subsequent demoulding by applying heat. The thickness is of approximately 2 millimetres, and can be up to 15 millimetres. This is why the main mould is more like a sheath than a conventional mould. This allows saving on material, time and ease of demoulding for any geometry.
   - Optionally the application of an additive on the inner face of the moulds to smooth out the surface.
   Once the sub-process for the generation of main moulds is completed or even at the same time takes place the sub-process for the creation of internal elements.
2.- The sub-process for the creation of internal elements comprises the following steps:
   - Computer modelling of the editable images until obtaining a file that is compatible with 3D printing. This computer modelling comprises the modelling of the virtual path of the auxiliary positioning elements as well as their relationship with the internal element (anchors, rest areas, housings, openings or supports), calculating the cross-section and length of these auxiliary positioning elements.
      A step for discriminating between rigid elements and soft elements where the rigid internal elements the files obtained in the first step of this sub-process are 3D printed and for the soft, transparent or translucent internal elements with different colours a secondary mould is obtained that then allows obtaining an element by pouring filling material into it, according to the following sub-steps:
      ∘ Discrimination by size between small parts and large parts: For internal elements that are large parts, the secondary mould is obtained preferably following the same process as for the generation of the main moulds that are large parts; internal elements that are small parts are obtained following the process described below.
         ▪ Prototyping of internal elements in positive and in a soluble material, preferably ABS.
         ▪ Obtaining a secondary mould by immersing the prototype in silicone, curing the silicone and removing the prototype to obtain the mould or secondary mould.
         ▪ Adding the pouring nozzles to the mould.
         ▪ Sealing the mould.
         ▪ Pouring the filling material and curing of the material, all this with temperature control. Comprising the following operations:
            - Prior cooling of the filling material, especially in the case of urethane rubber at a temperature around 5ºC. Since an exothermic reaction will take place after the pouring, and the higher the temperature the faster the curing speed, it is necessary to start from a low temperature of the filling material in order to slow down the curing time so that the relevant handling can take place, which comprises subjecting it to a vacuum and pouring it into the mould at atmospheric pressure.
            - Once the pouring operation is completed, the curing starts in a reboiler at a pressure of 70 psi with a temperature of more than 25ºC.
      ∘ Demoulding.
   Once the previous two processes have been completed the internal elements are then positioned in the main moulds.
3.- Sub-process for positioning the internal elements in the main moulds.
   The internal elements must be placed in their exact position inside the anatomical model. Sometimes it is easy to position them since these internal elements are in contact with or inserted into another anatomical element and are fastened or supported by the geometry of the main moulds itself without requiring auxiliary positioning elements, however, other times these internal elements must occupy a position that is far removed from any possible support on the main moulds, as if they were floating in the parenchyma.
   In said case, the positioning of these elements is performed using auxiliary positioning elements, such as for example rods, the location, supports, anchors, housings, cross-section and length of which has already been taken into account or predetermined in the computer modelling both of the main moulds and of the internal elements.
   Based on the above, the sub-process for positioning the internal elements comprises the following steps:
      - Computer modelling of the paths of the auxiliary positioning elements, such as for example rods, compatible with the modelling of the supports and anchors for same in the main moulds and in the internal elements. Thus, when modelling the paths of the auxiliary positioning elements their virtual path is created, comprising the openings and housings, supports, anchors or resting areas that said auxiliary positioning element shall occupy in the internal elements and the moulds, and their cross-section and length shall be predetermined. For reasons of organisational consistency, these openings and housings are modelled in the sub-processes for creating the main moulds and internal elements.
      - Obtaining the rods. According to an unclaimed embodiment, the rods, with a predetermined cross-section and length, could be in metal if they go through the moulds since, once the internal elements have been fastened by the addition and curing of the parenchyma, in which case the rods shall be removed and the holes filled with rigid or soft material as appropriate. As claimed herein they shall be in methacrylate as they are to remain inside, so that the refractive index of the material is as close as possible to that of the parenchyma.
      - Fastening of the internal elements to the rods and of the latter to the main moulds pursuant to the positioning calculated in the computer model.
      - For soft internal elements, the positioning sub-process also comprises a stiffening step of same using a reversible process such as by freezing.
4.- A sub-process for integration of the internal and external elements.
   Once the main moulds, internal elements and auxiliary positioning elements have been obtained and all these internal elements have been positioned in the main moulds, all the elements are integrated in order to create the anatomical model.
   This integration process comprises the following steps:
      - Closing of the main moulds with the internal elements already positioned inside.
      - Introduction of the parenchyma, by gravity or injection, through the pouring nozzles and curing thereof with temperature control. To do this the parenchyma is subjected to a prior vacuum operation in a vacuum hood so that it is extracted and poured at atmospheric pressure into the main mould, for which the procedure is as follows, especially in the case of urethane rubber:
         ∘ Cooling of the parenchyma, especially in the case of urethane rubber. Since an exothermic reaction will take place after the pouring, and the higher the temperature the faster the curing speed, it is necessary to start from a low temperature of the filling material in order to slow down the curing time so that the relevant handling can take place, which comprises subjecting it to a vacuum and pouring it into the mould at atmospheric pressure.
         ∘ Once the pouring or injection operation is completed, the curing starts in a reboiler at a pressure of 70 psi with a temperature of more than 25ºC.
      - The parenchyma comprises:
         ∘ For rigid elements, urethane rubber, since it has a suitable viscosity for pouring, short vacuum times are required to remove bubbles, and this allows obtaining a suitable transparency for our requirements, it cures at temperatures that do not deform the internal elements, it can be sanded down and it is not toxic.
         ∘ For soft elements the parenchyma comprises silicone or PVC.
      - Once the parenchyma has cured it is demoulded, for which the assembly is heated to a temperature between 60ºC and 100ºC, since from 60ºC the PLA in which the main mould is made starts to have a certain flexibility, whereas at more than 100ºC the demoulding operations become complicated since they involve a risk to the operator. Preferably the demoulding operation is performed at 70ºC.
      - The assembly is heated by subjecting it to a hot environment, preferably a hot fluid that may be water, for example, although we do not reject others such as oil or others.
      - Once the assembly has been heated it is demoulded. Removal, as appropriate, of positioning elements such as rods, and filling of the holes left by these with the same parenchyma that was poured into the main mould during the injection process.
5.- A post-processing sub-process.
   After demoulding all the elements of the anatomical model are integrated, and a post-processing is performed comprising:
   - Buffing to remove any burrs and imperfections the mould may have caused.
   - Application of a protective lacquer that also favours transparency.

### DESCRIPTION OF A PREFERRED EMBODIMENT OF THE INVENTION

Described below is an embodiment of the invention that is neither unique nor limiting but merely explanatory.

The process for manufacturing anatomical models starts by capturing one or more images using common techniques such as CAT (computerised axial tomography), NMR (nuclear magnetic resonance), ultrasound or any other, the processing of such images to select (segment) the different elements of the anatomical structure of interest from the images obtained and obtaining one or more editable computer files.

Having obtained the editable images, the manufacturing process of anatomical models comprises the following sub-processes:
1. A sub-process for generating the main moulds.
2. A sub-process for generating the internal elements.
3. A sub-process for positioning the internal elements.
4. A sub-process for integration of the internal and external elements.
5. A post-processing sub-process.

The sub-process for generating the main moulds includes the following steps:
- Computer modelling of the editable images until obtaining a file that is compatible with 3D printing. The computer modelling comprises not only the shape itself of the anatomical model to be manufactured, but also the modelling of the auxiliary positioning elements, which implies their housings (anchors, rest areas, supports, and position openings) and the openings for the pouring nozzles through which the parenchyma will be poured or injected, as well as determining the cross-section and length of the auxiliary positioning elements.
- In the step for discriminating by size, since we intend to manufacture a large piece, we choose to print the mould.
- Printing the mould in PLA. This main mould has a thickness of 2 millimetres, which makes it more like a sheath than a conventional mould. This allows saving on material, time and ease of demoulding for any geometry.
- Application of an additive on the inner face of the moulds to smooth out the surface.

The sub-process for the generation of internal elements, in this case soft internal elements, includes the following steps:
- Computer modelling of the editable images until obtaining a file that is compatible with 3D printing. The computer modelling comprises not only the shape of the part to be manufactured, but also the housings (anchors, resting areas, supports or positioning openings) for the auxiliary positioning elements and the openings for the pouring nozzles through which the filling material shall be poured or injected.
- Since we intend to manufacture a small part, when discriminating by size we have chosen to obtain a secondary mould through the following sub-steps:
   ∘ Prototyping of the internal elements in positive by printing in ABS.
   ∘ Immersion of the printed prototype in silicone and removal of the prototype to obtain the secondary mould.
   ∘ Adding the pouring nozzles to the mould.
   ∘ Sealing the mould.
   ∘ Pouring of the filling material. The filling material has previously been subjected to a vacuum operation outside the mould in order to be subsequently poured at atmospheric pressure into the mould.
   ∘ The filling material is silicone.
   ∘ Demoulding.

The sub-process for positioning the internal elements includes the following steps:
- Obtaining auxiliary positioning elements, in this case metal rods with a predetermined cross-section and length from modelling the virtual path of the auxiliary positioning elements.
- A stiffening step of the internal elements using a reversible process, in this case freezing, in order to provide the sufficient stiffness as to be able to place them with the rods.
- Fastening of the internal elements to the rods and of the latter to the main moulds pursuant to the positioning calculated in the computer modelling of the virtual path.

The sub-process for integration of the internal and external elements comprises the following steps:
- Closing of the main moulds with the internal elements already positioned inside.
- Pouring of the parenchyma material through the pouring nozzles, in this case this comprises urethane rubber. To do this such material is subjected to a prior cooling to 5º to slow down its curing. After such prior cooling the parenchyma material is subjected to a vacuum operation under a vacuum hood and is subsequently removed from it and poured at atmospheric pressure into the main mould.
- The curing is performed in a reboiler with controlled temperature at more than 25ºC.
- Once the parenchyma has cured the entire assembly is heated with water at 70ºC for a subsequent demoulding and removal of the rods.
- Once the rods have been removed the holes are filled with the same parenchyma material used.

A post-processing sub-process.

After demoulding there is a post-processing sub-process comprising:
- Buffing to remove imperfections and to smooth out surfaces.
- Application of a protective lacquer that also favours transparency.

## Claims

1. PROCESS FOR MANUFACTURING ANATOMICAL MODELS comprising the capture of one or more images, such as using common techniques such as CAT (computerised axial tomography), NMR (nuclear magnetic resonance), ultrasound or any other, and the processing of such images to select (segment) the different elements of the anatomical structure of interest from the images obtained, obtaining one or more editable computer files for the subsequent creation, using 3D printing, of elements of the anatomical model and moulds for its total or partial manufacture, **characterised by** comprising:
- a first sub-process for generating the main moulds comprising modelling of the virtual path of the auxiliary positioning elements and their relationship with the main mould, calculating the cross-section and length of these auxiliary positioning elements, a step for discriminating by size between large parts and small parts, , and a step for creating the mould, where, for large parts, the step for creating the mould comprises printing the mould in PLA with a thickness of between 2 mm and 15 mm while, for small parts, the step for creating the mould comprises prototyping the part in positive, immersing it in silicone, curing the silicone, and removing the prototype;
- a second sub-process for generating the internal elements comprising modelling the virtual path of the auxiliary positioning elements and their relationship with the internal element, calculating the cross-section and length of such elements, a step for discriminating between rigid elements and soft elements, a step for discriminating by size between large parts and small parts, and in the case of soft parts, a step for generating secondary moulds, a step of pouring filling material and an demoulding step, where, for soft large parts, the step for generating secondary moulds comprises printing the mould in PLA with a thickness of between 2 mm and 15 mm while, for soft small parts, the step for generating secondary moulds comprises prototyping the part in positive, immersing it in silicone, curing the silicone and removing the prototype, and further comprising printing rigid internal elements;
- a third sub-process for positioning the internal elements, which when it includes soft elements comprises a step of reversible stiffening, comprising fastening the auxiliary positioning elements to the internal elements and the main mould, and where the auxiliary positioning elements are methacrylate rods having a refractive index similar to that of the parenchyma intended to remain inside the parenchyma;
- a fourth sub-process for integrating the internal elements comprising a step of pouring of parenchyma and a demoulding step, wherein the demoulding step of the main or secondary mould made in PLA comprises heating to a temperature of between 60°C and 100°C; and
- a fifth post-processing sub-process comprises buffing to remove imperfections and to smooth out surfaces and the application of a protective lacquer.

2. PROCESS FOR THE MANUFACTURE OF ANATOMICAL MODELS according to claim 1, wherein an additive is also applied to the inner face of the main mould in order to smooth out the inner surface.

3. PROCESS FOR THE MANUFACTURE OF ANATOMICAL MODELS according to claim 1, wherein the step for reversible stiffening of the third sub-process for positioning internal elements comprises freezing the soft internal elements.

4. PROCESS FOR THE MANUFACTURE OF ANATOMICAL MODELS according to claim 1, wherein the pouring step comprises the introduction, into the main or secondary mould, of the previously refrigerated pouring material.

5. PROCESS FOR THE MANUFACTURE OF ANATOMICAL MODELS according to claim 4, wherein the pouring material is refrigerated to 5°C in a cooling step prior to pouring.

6. PROCESS FOR THE MANUFACTURE OF ANATOMICAL MODELS according to claim 4, wherein the pouring step also comprises a step for subjecting the pouring material to a vacuum prior to pouring.

7. PROCESS FOR THE MANUFACTURE OF ANATOMICAL MODELS according to claim 4, wherein in the pouring step, the pouring is performed at atmospheric pressure and also comprises, after pouring, a curing step in a reboiler at a pressure of 70 psi and at a controlled temperature of more than 25°C.

8. PROCESS FOR THE MANUFACTURE OF ANATOMICAL MODELS according to claim 1, wherein the heating is performed by subjecting the assembly to the action of a heated fluid.

9. PROCESS FOR THE MANUFACTURE OF ANATOMICAL MODELS according to claim 1, wherein the fluid is water.

10. PROCESS FOR THE MANUFACTURE OF ANATOMICAL MODELS according to claim 1, wherein the pouring material comprises urethane rubber.

## Patentansprüche

1. Verfahren zur Herstellung anatomischer Modelle umfassend die Erfassung eines oder mehrerer Bilder, wie unter Verwendung gewöhnlicher Techniken wie CAT (computerisierte axiale Tomographie), NMR (kernmagnetische Resonanz), Ultraschall oder sonstiger, und die Bearbeitung solcher Bilder, um die unterschiedlichen Elemente der anatomischen Struktur von Interesse aus den erhaltenen Bildern auszuwählen (segmentieren), sodass eine oder mehr editierbaren Computerdateien erhalten werden, für die nachträgliche Erstellung, unter Verwendung von 3D-Druck, von Elementen des anatomischen Modells und Formen für dessen gesamten oder teilweisen Herstellung, **dadurch gekennzeichnet, dass** es Folgendes umfasst:
- einen ersten Teilprozess zum Erzeugen der Hauptformen umfassend das Modellieren des virtuellen Pfades der Hilfspositionierelemente und deren Beziehung zur Hauptform, das Berechnen des Querschnitts und der Länge dieser Hilfspositionierelemente, einen Schritt zum Unterscheiden nach Größe zwischen großen Teilen und kleinen Teilen, und einen Schritt zum Erstellen der Form, in welchem, für große Teile, der Schritt zum Erstellen der Form das Drucken der Form in PLA mit einer Dicke zwischen 2 mm und 15 mm umfasst, während, für kleine Teile, der Schritt zum Erstellen der Form das Prototyping des Teils in positiv, das Eintauchen desselben in Silikon, das Härten des Silikons und das Entfernen des Prototyps umfasst;
- einen zweiten Teilprozess zum Erzeugen der inneren Elemente umfassend das Modellieren des virtuellen Pfades der Hilfspositionierelemente und deren Beziehung zum inneren Element, das Berechnen des Querschnitts und der Länge solcher Elemente, einen Schritt zum Unterscheiden zwischen starren Elementen und weichen Elementen, einen Schritt zum Unterscheiden nach Größe zwischen großen Teilen und kleinen Teilen, und im Falle von weichen Teilen, einen Schritt zum Erzeugen von Sekundärformen, einen Schritt des Gießens von Füllmaterial und einen Entformungsschritt, in welchem, für große weiche Teile, der Schritt zum Erzeugen von Sekundärformen das Drucken der Form in PLA mit einer Dicke zwischen 2 mm und 15 mm umfasst, während, für kleine weiche Teile, der Schritt zum Erzeugen von Sekundärformen das Prototyping des Teils in positiv, das Eintauchen desselben in Silikon, das Härten des Silikons und das Entfernen des Prototyps umfasst, und zusätzlich das Drucken von starren inneren Elementen umfasst;
- einen dritten Teilprozess zum Positionieren der inneren Elemente, welcher, wenn er weiche Elemente einschließt, einen Schritt der reversiblen Versteifung umfasst, welcher das Befestigen der Hilfspositionierelemente an den inneren Elementen und der Hauptform umfasst, und in welchem die Hilfspositionierelemente Methacrylatstäbe sind, welche einen Brechungsindex aufweisen, welcher demjenigen des Parenchyms ähnlich ist, welche dafür bestimmt sind, innerhalb des Parenchyms zu bleiben;
- einen vierten Teilprozess zum Integrieren der inneren Elemente umfassend einen Schritt des Gießens von Parenchym und einen Entformungsschritt, wobei der Entformungsschritt der in PLA hergestellten Haupt- oder Sekundärform das Erhitzen auf eine Temperatur zwischen 60°C und 100°C umfasst; und
- einen fünften Nachbearbeitungsteilprozess umfassend das Polieren zur Beseitigung von Imperfektionen und zur Glättung von Flächen und das Auftragen eines Schutzlacks.

2. Verfahren zur Herstellung anatomischer Modelle nach Anspruch 1, wobei ein Zusatzstoff auch auf der Innenfläche der Hauptform aufgetragen wird, um die Innenfläche zu glätten.

3. Verfahren zur Herstellung anatomischer Modelle nach Anspruch 1, wobei der Schritt zur reversiblen Versteifung des dritten Teilprozesses zum Positionieren der inneren Elemente das Einfrieren der weichen inneren Elemente umfasst.

4. Verfahren zur Herstellung anatomischer Modelle nach Anspruch 1, wobei der Schritt des Gießens das Einführen, in die Haupt- oder Sekundärform, des zuvor gekühlten Gießmaterials umfasst.

5. Verfahren zur Herstellung anatomischer Modelle nach Anspruch 4, wobei das Gießmaterial auf 5°C in einem Kühlschritt vor dem Gießen gekühlt wird.

6. Verfahren zur Herstellung anatomischer Modelle nach Anspruch 4, wobei der Schritt des Gießens auch einen Schritt zum Aussetzen des Gießmaterials einem Vakuum vordem Gießen umfasst.

7. Verfahren zur Herstellung anatomischer Modelle nach Anspruch 4, wobei, im Schritt des Gießens, das Gießen bei Atmosphärendruck durchgeführt wird und auch, nach dem Gießen, einen Schritt des Härtens in einem Verdampfer bei einem Druck von 70 psi und bei einer kontrollierten Temperatur von mehr als 25°C umfasst.

8. Verfahren zur Herstellung anatomischer Modelle nach Anspruch 1, wobei das Erhitzen durchgeführt wird, indem die Baugruppe der Wirkung eines erhitzten Fluids ausgesetzt wird.

9. Verfahren zur Herstellung anatomischer Modelle nach Anspruch 1, wobei das Fluid Wasser ist.

10. Verfahren zur Herstellung anatomischer Modelle nach Anspruch 1, wobei das Gießmaterial Urethankautschuk umfasst.

## Revendications

1. Procédé de fabrication de modèles anatomiques comprenant la capture d'une ou plusieurs images, tel qu'en utilisant des techniques courantes telles que CAT (tomographie axiale informatisée), RMN (résonance magnétique nucléaire), échographie ou toute autre, et le traitement de telles images pour sélectionner (segmenter) les différents éléments de la structure anatomique d'intérêt à partir des images obtenues, en obtenant un ou plusieurs fichiers informatiques éditables pour la création ultérieure, en utilisant l'impression 3D, d'éléments du modèle anatomique et de moules pour sa fabrication totale ou partielle, **caractérisé en ce qu'**il comprend :
- un premier sous-procédé pour générer les moules principaux comprenant la modélisation de la trajectoire virtuelle des éléments de positionnement auxiliaires et leur relation avec le moule principal, le calcul de la coupe transversale et de la longueur de ces éléments de positionnement auxiliaires, une étape pour la discrimination par taille entre des grandes parties et des petites parties, et une étape pour créer le moule, où, pour les grandes parties, l'étape pour créer le moule comprend l'impression du moule en PLA avec une épaisseur comprise entre 2 mm et 15 mm tandis que, pour les petites parties, l'étape pour créer le moule comprend le prototypage de la partie en positif, l'immersion dans du silicone, le durcissement du silicone et la retraite du prototype ;
- un deuxième sous-procédé pour générer les éléments internes comprenant la modélisation de la trajectoire virtuelle des éléments de positionnement auxiliaires et de leur relation avec l'élément interne, le calcul de la coupe transversale et la longueur de tels éléments, une étape pour la discrimination entre des éléments rigides et des éléments souples, une étape pour la discrimination par taille entre des grandes parties et des petites parties et, dans le cas des parties souples, une étape de génération de moules secondaires, une étape de coulée de matériau de remplissage et une étape de démoulage, où, pour les grandes parties souples, l'étape de génération de moules secondaires comprend l'impression du moule en PLA avec une épaisseur comprise entre 2 mm et 15 mm tandis que, pour les petites parties souples, l'étape de génération de moules secondaires comprend le prototypage de la partie en positif, l'immersion dans du silicone, le durcissement du silicone et la retraite du prototype, et comprenant en outre l'impression d'éléments internes rigides ;
- un troisième sous-procédé pour positionner les éléments internes, qui, lorsqu'il inclut des éléments souples, comprend une étape de raidissement réversible, comprenant la fixation des éléments de positionnement auxiliaires aux éléments internes et au moule principal, et où les éléments de positionnement auxiliaires sont des tiges en méthacrylate ayant un indice de réfraction similaire à celui du parenchyme destinées à rester à l'intérieur du parenchyme ;
- un quatrième sous-procédé pour l'intégration des éléments internes comprenant une étape de coulée du parenchyme et une étape de démoulage, dans lequel l'étape de démoulage du moule principal ou secondaire faits en PLA comprend le chauffage jusqu'à une température comprise entre 60°C et 100°C ; et
- un cinquième sous-procédé de post-traitement comprend le polissage pour éliminer des imperfections et pour lisser les surfaces et l'application d'une laque de protection.

2. Procédé de fabrication de modèles anatomiques selon la revendication 1, dans lequel un additif est aussi appliqué sur la face interne du moule principal afin de lisser la surface interne.

3. Procédé de fabrication de modèles anatomiques selon la revendication 1, dans lequel l'étape de raidissement réversible du troisième sous-procédé pour le positionnement d'éléments internes comprend la congélation des éléments internes souples.

4. Procédé de fabrication de modèles anatomiques selon la revendication 1, dans lequel l'étape de coulée comprend l'introduction, dans le moule principal ou secondaire, du matériau de coulée préalablement réfrigéré.

5. Procédé de fabrication de modèles anatomiques selon la revendication 4, dans lequel le matériau de coulée est réfrigéré jusqu'à 5°C dans une étape de refroidissement avant la coulée.

6. Procédé de fabrication de modèles anatomiques selon la revendication 4, dans lequel l'étape de coulée comprend aussi une étape pour soumettre le matériau de coulée à un vide avant la coulée.

7. Procédé de fabrication de modèles anatomiques selon la revendication 4, dans lequel dans l'étape de coulée, la coulée est réalisée à la pression atmosphérique et comprend aussi, après la coulée, une étape de durcissement dans un rebouilleur à une pression de 70 psi et à une température contrôlée de plus de 25ºC.

8. Procédé de fabrication de modèles anatomiques selon la revendication 1, dans lequel le chauffage est effectué en soumettant l'ensemble à l'action d'un fluide chauffé.

9. Procédé de fabrication de modèles anatomiques selon la revendication 1, dans lequel le fluide est de l'eau.

10. Procédé de fabrication de modèles anatomiques selon la revendication 1, dans lequel le matériau de coulée comprend du caoutchouc d'uréthane.
